# EUROPEAN PATENT SPECIFICATION

(11) **EP 3 148 289 B1**
(45) Date of publication and mention of the grant of the patent: **19.09.2018**
(21) Application number: 14895073.6
(22) Date of filing: 17.06.2014
(51) Int. Cl.: H04W 28/18, H04W 36/14, H04W 24/02, H04W 88/06, H04W 88/10, H04W 48/18, H04W 36/00

(54) **NETWORK COMMUNICATION METHOD AND APPARATUS**
NETZWERKKOMMUNIKATIONSVERFAHREN UND VORRICHTUNG
PROCÉDÉ ET APPAREIL DE COMMUNICATION EN RÉSEAU

(43) Date of publication of application: 29.03.2017
(73) Proprietor: Huawei Technologies Co. Ltd., Shenzhen, Guangdong 518129 (CN)
(72) Inventor: PENG, Chenghui, Shenzhen Guangdong 518129 (CN); YANG, Xun, Shenzhen Guangdong 518129 (CN); NI, Rui, Shenzhen Guangdong 518129 (CN)
(74) Representative: Goddar, Heinz J.
(86) International application number: PCT/CN2014/080093
(87) International publication number: WO 2015/192317

(56) References cited:
- EP-A1- 1 708 526
- WO-A1-2007/016940
- WO-A1-2010/077501
- CN-A- 103 368 611
- CN-A- 103 687 052
- CN-A- 103 731 938
- US-A1- 2010 208 607
- US-A1- 2011 310 851

## Description

### TECHNICAL FIELD

Embodiments of the present invention relate to the field of wireless communications, and in particular, to a network communication method and an apparatus.

### BACKGROUND

With rapid development of communications technologies and popularization of intelligent user terminals, the user terminal may support communications systems of multiple communications standards such as a wireless cellular network, a wireless local area network (Wireless Local Area Network, WLAN), Worldwide Interoperability for Microwave Access (Worldwide Interoperability for Microwave Access, WiMAX), Bluetooth, an infrared ray, and other communications standards. The user terminal may select a communications standard according to a particular policy to perform data communication. There are many specific standard selection policies, and relatively common standard selection polices include: lowest traffic costs, a highest download speed, minimum battery power consumption, preferential use of a WLAN by default, and the like.

To adapt to differentiated requirements for multiple communications standards or multiple connections of a user terminal, an evolvement trend of a wireless network is accelerating development towards heterogeneous convergence of a wireless cellular network and a wireless local area network. An existing communications network convergence architecture consists of two parts: a core network (Core Network, CN) and an radio access network (Radio Access Network, RAN). In the core network, specifically, network elements such as a gateway GPRS support node (Gateway GPRS Support Node, GGSN)/packet data network gateway (Packet Data Network Gateway, PGW), a serving GPRS support node (Serving GPRS Support Node, SGSN), and a serving gateway (Serving Gateway, SGW) form a control plane and a user plane, and auxiliary network elements such as a home subscriber server (Home Subscriber Server, HSS), a policy and charging rules function (Policy and Charging Rules Function, PCRF), an authentication authorization accounting server (Authentication Authorization Accounting Server, AAA Server), and an access network discovery and selection function (Access Network Discovery and Selection Function, ANDSF) form a user information database. The radio access network includes not only a wireless cellular network consisting of a base station controller (Base Station Controller, BSC)/radio network controller (Radio Network Controller, RNC), and a base transceiver station (Base Transceiver Station, BTS)/NodeB NodeB/evolved NodeB eNodeB but also a WLAN consisting of a WLAN access point (Access Point, AP). In addition, another solution for converging the wireless cellular network and the WLAN is adding a Wireless Fidelity controller (Wireless Fidelity Controller, WFC) to an RAN. The WIC communicates with a BSC in a second generation wireless cellular network, an RNC in a third generation wireless cellular network, and a mobility management entity (Mobility Management Entity, MME) in a fourth generation wireless cellular network by using a set of self-defined interfaces.

In the prior art, a solution for converging a wireless cellular network and a wireless local area network is a network convergence manner that operates at or above a network layer, and a network convergence node is a GGSN/PGW or a WIC. A user terminal and an Internet service server are considered as two ends of a user traffic flow. When the traffic flow is switched between the wireless cellular network and the WLAN in the GGSN/PGW or the WIC, completely different Internet protocol (Internet Protocol, IP) addresses and completely different routing paths are used for the traffic flow, and in this case, traffic flow interruption is caused. In addition, because a resource reservation policy is used for the wireless cellular network in a licensed spectrum, better quality of service (Quality of Service, QoS) guarantee is possessed, while a sharing contention policy is used for the WLAN in an unlicensed spectrum, and better QoS guarantee cannot be provided. This QoS difference caused to spectrum allocation policies because of different communications standards causes difficulty in maintaining user experience consistency after a communications standard is switched. In conclusion, the prior art has the following problems: Temporary traffic flow interruption is caused in a communications standard switching process and user experience consistency cannot be ensured after a communications standard is switched. WO2007/016940A1 discloses a communication system which is arranged for accessing a network by a group of first access paths and a group of second access paths. The first and second access paths have a different access technology. An access path monitor is provided for obtaining status information related to the access paths in accordance with the monitoring procedure. An access controller is provided for selecting an access path for a communication session in accordance with a selection procedure and in dependence on the status information. A modifier is provided for modifying one or both of the monitoring procedure and the selection procedure in accordance with a modification procedure and in dependence on decision information.

### SUMMARY

The invention is set out in the appended set of claims. The embodiments and/or examples of the following description which are not covered by the appended claims are considered as not being part of the present invention. Embodiments of the present invention provide a network communication method and an apparatus, which can avoid temporary traffic flow interruption in a user terminal and ensure user experience consistency when different communications standards are used to provide a user with a service.

According to a first aspect, an embodiment of the present invention provides a wireless communications control apparatus, and the apparatus includes:
a monitoring unit, configured to monitor link performance parameters respectively corresponding to multiple communications standards, wherein the multiple communications standards is supported by a data link layer;
   a determining unit, configured to determine, according to a link performance parameter corresponding to a currently used communications standard, whether another communications standard needs to be used to transmit user data;
   a selection unit, configured to select, if the another communications standard needs to be used, a communications standard that needs to be used to transmit the user data; wherein the selection unit is specifically configured to:
      select at least two communications standards in other communications standards except the currently used communications standard to simultaneously transmit the user data according to a preset proportion; or
      select the currently used communications standard and at least one communications standard in said other communications standards to simultaneously transmit the user data according to a preset proportion;
a matching unit, configured to perform parameter matching on the user data according to a system parameter corresponding to the selected communications standard; and
a transmission unit, configured to transmit the data which is obtained after the parameter-matching processing by using the data link layer and a physical layer.

With reference to the first aspect, in a first possible implementation manner, the matching unit is specifically configured to:
perform rate matching, packet length matching, quality of service matching, or security matching on the user data according to the system parameter corresponding to the selected communications standard.

With reference to the first aspect or the first possible implementation manner of the first aspect, in a second possible implementation manner, the selection unit is specifically configured to:
select any one of other communications standards except the currently used communications standard to transmit the user data; or
select at least two communications standards in other communications standards except the currently used communications standard to simultaneously transmit the user data according to a preset proportion; or
select the currently used communications standard and at least one communications standard in said other communications standards to simultaneously transmit the user data according to a preset proportion.

With reference to any one of the first aspect to the second possible implementation manner of the first aspect, in a third possible implementation manner, the monitoring unit is specifically configured to:
monitor quantities of authenticated users who access a network, throughputs, or cache queue lengths respectively corresponding to the multiple communications standards supported by the data link layer.

With reference to the third possible implementation manner of the first aspect, in a fourth possible implementation manner, the determining unit is specifically configured to:
compare a quantity of authenticated users who access a network, a throughput, or a cache queue length of the currently used communications standard with a corresponding preset threshold; and r
if the quantity of authenticated users who access a network, the throughput, or the cache queue length is greater than the corresponding preset threshold, determine that the another communications standard needs to be used to transmit the user data.

With reference to the second possible implementation manner of the first aspect, in a fifth possible implementation manner, the matching unit is further specifically configured to:
if a communications standard that belongs to a first communications standard for which a spectrum resource reservation policy is used exists in the communications standard selected from the other communications standards, apply to a resource manager of the selected communications standard that belongs to the first communications standard for a transmission resource, and perform parameter matching on the user data after the transmission resource is obtained by application, where the first communications standard includes a wireless cellular network and Worldwide Interoperability for Microwave Access WiMAX.

With reference to the first aspect, in a sixth possible implementation manner, the apparatus further includes:
a receiving unit, configured to receive an acknowledgement feedback message ACK or a non-acknowledgement feedback message NACK, where the acknowledgement feedback message is a message sent after a data receive end acknowledges that the data is correctly received, and the non-acknowledgement feedback message is a message sent after the data receive end acknowledges that the data is not correctly received.

According to a second aspect, an embodiment of the present invention provides a network communication method, and the method includes:
monitoring link performance parameters respectively corresponding to multiple communications standards, wherein the multiple communications standards is supported by a data link layer;
determining, according to a link performance parameter corresponding to a currently used communications standard, whether another communications standard needs to be used to transmit user data;
   selecting, if the another communications standard needs to be used, a communications standard that needs to be used to transmit the user data; wherein the selecting a communications standard that needs to be used to transmit the user data comprises:select at least two communications standards in other communications standards except the currently used communications standard to simultaneously transmit the user data according to a preset proportion; or select the currently used communications standard and at least one communications standard in said other communications standards to simultaneously transmit the user data according to a preset proportion;
performing parameter matching on the user data according to a system parameter corresponding to the selected communications standard; and
transmitting the data which is obtained after the parameter-matching processing by using the data link layer and a physical layer.

With reference to the second aspect, in a first possible implementation manner, the performing parameter matching on the user data according to a system parameter corresponding to the selected communications standard includes:
performing rate matching, packet length matching, quality of service matching, or
security matching on the user data according to the system parameter corresponding to the selected communications standard.

With reference to the second aspect or the first possible implementation manner of the second aspect, in a second possible implementation manner, the selecting a communications standard that needs to be used to transmit the user data includes:
selecting any one of other communications standards except the currently used communications standard to transmit the user data; or
selecting at least two communications standards in other communications standards except the currently used communications standard to simultaneously transmit the user data according to a preset proportion; or
selecting the currently used communications standard and at least one communications standard in said other communications standards to simultaneously transmit the user data according to a preset proportion.

With reference to any one of the second aspect to the second possible implementation manner of the second aspect, in a third possible implementation manner, the monitoring link performance parameters respectively corresponding to multiple communications standards supported by a data link layer includes:
monitoring quantities of authenticated users who access a network, throughputs, or cache queue lengths respectively corresponding to the multiple communications standards supported by the data link layer.

With reference to the third possible implementation manner of the second aspect, in a fourth possible implementation manner, the determining, according to a link performance parameter corresponding to a currently used communications standard, whether another communications standard needs to be used to transmit user data includes:
comparing a quantity of authenticated users who access a network, a throughput, or a cache queue length of the currently used communications standard with a corresponding preset threshold; and
if the quantity of authenticated users who access a network, the throughput, or the cache queue length is greater than the corresponding preset threshold, determining that the another communications standard needs to be used to transmit the user data.

With reference to the second possible implementation manner of the second aspect, in a fifth possible implementation manner, the performing parameter matching in different communications standards on the user data according to the selected communications standard includes:
if a communications standard that belongs to a first communications standard for which a spectrum resource reservation policy is used exists in the communications standard selected from the other communications standards, applying to a resource manager of the selected communications standard that belongs to the first communications standard for a transmission resource, and performing parameter matching on the user data after the transmission resource is obtained by application, where the first communications standard includes a wireless cellular network and Worldwide Interoperability for Microwave Access WiMAX.

With reference to the second aspect, in a sixth possible implementation manner, the method further includes:
receiving an acknowledgement feedback message ACK or a non-acknowledgement feedback message NACK, where the acknowledgement feedback message is a message sent after a data receive end acknowledges that the data is correctly received, and the non-acknowledgement feedback message is a message sent after the data receive end acknowledges that the data is not correctly received.

According to a third aspect, an embodiment of the present invention provides a user terminal, and the user terminal includes any wireless communications control apparatus according to the first aspect.

According to a fourth aspect, an embodiment of the present invention provides a base station, and base station includes any wireless communications control apparatus according to the first aspect.

According to the network communication method and the apparatus that are provided in the embodiments of the present invention, link performance parameters respectively corresponding to multiple communications standards supported by a data link layer are monitored first, then whether another communications standard needs to be used to transmit user data is determined according to a link performance parameter corresponding to a currently used communications standard, and if the another communications standard needs to be used, a communications standard that needs to be used to transmit the user data is selected, then parameter matching is performed on the user data according to a system parameter corresponding to the selected communications standard, and the parameter-matched data is transmitted by using the data link layer and a physical layer. In this way, different communications standards can be used to provide a user with a service, which can avoid temporary traffic flow interruption in a user terminal, and ensure user experience consistency. Therefore, overall efficiency of a communications system is higher.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1a is a schematic diagram 1 of a wireless network of multiple communications standards according to an embodiment of the present invention;
FIG. 1b is a schematic diagram 2 of a wireless network of multiple communications standards according to an embodiment of the present invention;
FIG. 1c is a schematic diagram 3 of a wireless network of multiple communications standards according to an embodiment of the present invention;
FIG. 1d is a schematic diagram 4 of a wireless network of multiple communications standards according to an embodiment of the present invention;
FIG. 2 is a schematic diagram 2 of a protocol layer of a wireless communications control apparatus according to an embodiment of the present invention;
FIG. 3 is a schematic diagram 2 of a protocol layer of a wireless communications control apparatus according to an embodiment of the present invention;
FIG. 4 is a schematic structural diagram 1 of a wireless communications control apparatus according to an embodiment of the present invention;
FIG. 5 is a schematic structural diagram 2 of a wireless communications control apparatus according to an embodiment of the present invention;
FIG. 6 is a schematic flowchart 1 of a network communication method according to an embodiment of the present invention;
FIG. 7 is a schematic flowchart 2 of a network communication method according to an embodiment of the present invention;
FIG. 8 is a schematic diagram 1 of an effect of a network communication method according to an embodiment of the present invention; and
FIG. 9 is a schematic diagram 2 of an effect of a network communication method according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that run on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

In addition, aspects or features of the present invention may be implemented as a method, an apparatus or a product that uses standard programming and/or engineering technologies. The term "product" used in this application covers a computer program that may be accessed from any computer-readable component, carrier or medium. For example, the computer-readable medium may include but is not limited to: a magnetic storage component (for example, a hard disk, a floppy disk, or a magnetic tape), an optical disc (for example, a CD (Compact Disk, compact disk), a DVD (Digital Versatile Disk, digital versatile disk), a smart card, and a flash memory component (for example, EPROM (Erasable Programmable Read-Only Memory, erasable programmable read-only memory), a card, a stick, or a key drive). In addition, various storage media described in this specification may indicate one or more devices and/or other machine-readable media that are used to store information. The term "machine-readable media" may include but is not limited to a radio channel, and various other media that can store, contain and/or carry an instruction and/or data.

Multiple communications standards mentioned in various implementation manners may be GSM (Global System for Mobile communication, global system for mobile communications) or CDMA (Code Division Multiple Access, Code Division Multiple Access), or may be WCDMA (Wideband Code Division Multiple Access, Wideband Code Division Multiple Access), or may be LTE (Long Term Evolution, Long Term Evolution), a future 5G network standard, or another communications standard such as a wireless local area network (Wireless Local Area Network, WLAN), Worldwide Interoperability for Microwave Access (Worldwide Interoperability for Microwave Access, WiMAX), Bluetooth, or an infrared ray.

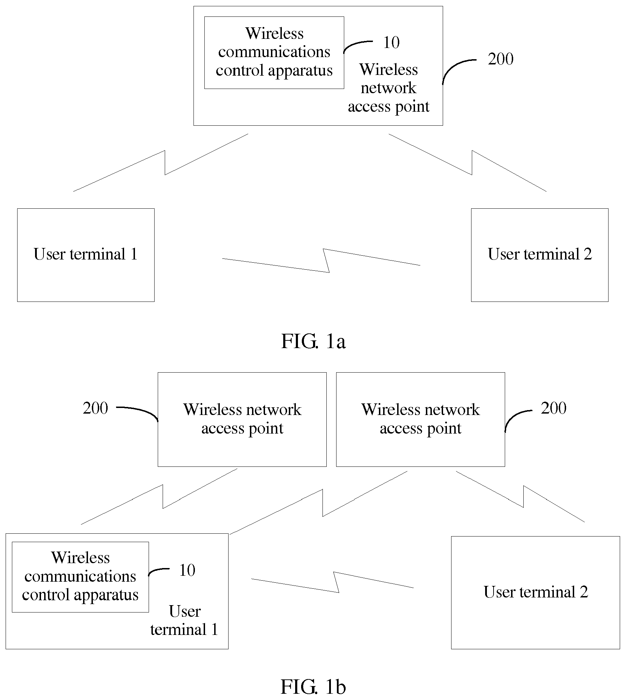

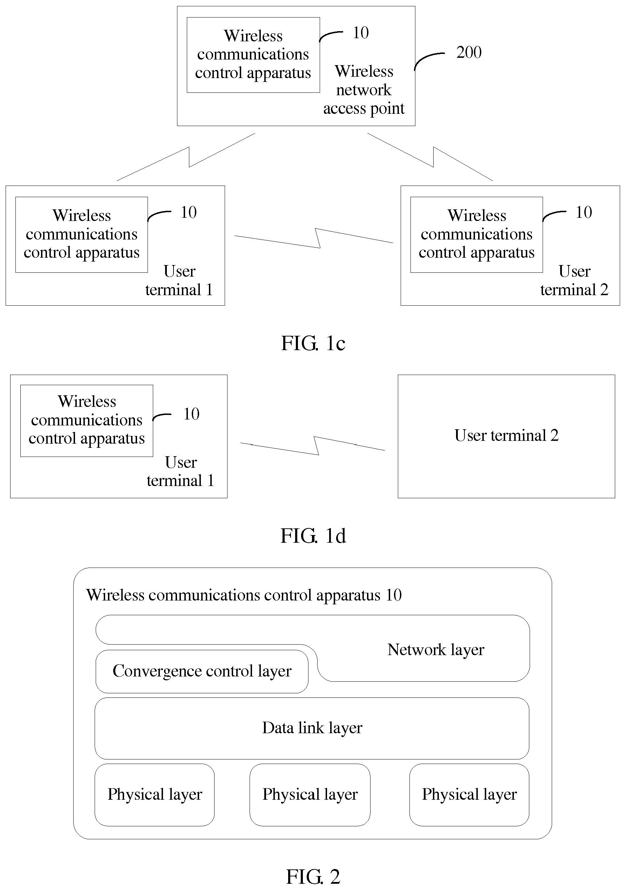

Referring to FIG. 1a to FIG. 1d, FIG. 1a to FIG. 1d are simple schematic diagrams of a wireless network of multiple communications standards according to an embodiment of the present invention. The wireless network includes a wireless network access point 200, a terminal 1, and a terminal 2 (another terminal or network node is not shown). At least one device in the wireless network includes a multi-standard control function (a wireless communications control apparatus 10) provided in an implementation manner of the present invention, and may perform convergence at a data link layer, so as to implement unified communication in multiple communications standards. As shown in FIG. 1a, the wireless network access point 200 that has the wireless communications control apparatus 10 may perform unified communication in different standards with the terminal 1 and the terminal 2. The terminal 1 and the terminal 2 may have only a multi-standard communication function but no multi-standard control function (the wireless communications control apparatus 10). As shown in FIG. 1b, the terminal 1 that has the multi-standard control function (the wireless communications control apparatus 10) may perform unified communication with wireless network access points 200 in different standards. In a system shown in FIG. 1c, all the wireless network access point 200, the terminal 1, and the terminal 2 may have the multi-standard control function (the wireless communications control apparatus 10). Certainly, as shown in FIG. 1d, the wireless network may include only the terminal 1 that has the multi-standard control function (the wireless communications control apparatus 10) and the terminal 2 (which may not have the multi-standard control function (the wireless communications control apparatus 10) and may have only a multi-standard communication function). Direct multi-standard wireless communication may be performed between the terminal 1 and the terminal 2 by using an implementation manner provided in the present invention.

The wireless communications control apparatus 10 may include two or more independent physical layers of wireless access standards, and transmission functions of data link layers of wireless access standards and a function of a layer above the data link layers are converged. Control functions of the data link layers may be separated to form an independent convergence control layer. Seamless transmission switching in different communications standards for user data stored in a shared storage area and transmission quality consistency may be implemented by using an interface between the convergence control layer and the data link layer.

Referring to FIG. 2, FIG. 2 is a simple schematic diagram of a protocol layer of a wireless communications control apparatus 10 according to an implementation manner of the present invention, and is used to describe a working principle of the wireless communications control apparatus 10.

The wireless communications control apparatus 10 shown in FIG. 2 includes two or more mutually independent physical layers, so as to support a physical layer part of wireless communication in multiple communications standards. Data link layers of the multiple communications standards are converged into a single data link layer. There is a convergence control layer above the data link layer. The data link layer and the convergence control layer each have an interface connected to a network layer. There may be a high-speed shared memory inside the data link layer, and the high-speed shared memory may be simultaneously read and written by physical layers of multiple communications standards.

The data link layer in FIG. 2 supports multiple communications standards, and the multiple communications standards include but are not limited to a wireless cellular network, a wireless local area network WLAN, Worldwide Interoperability for Microwave Access WiMAX, Bluetooth, and an infrared ray.

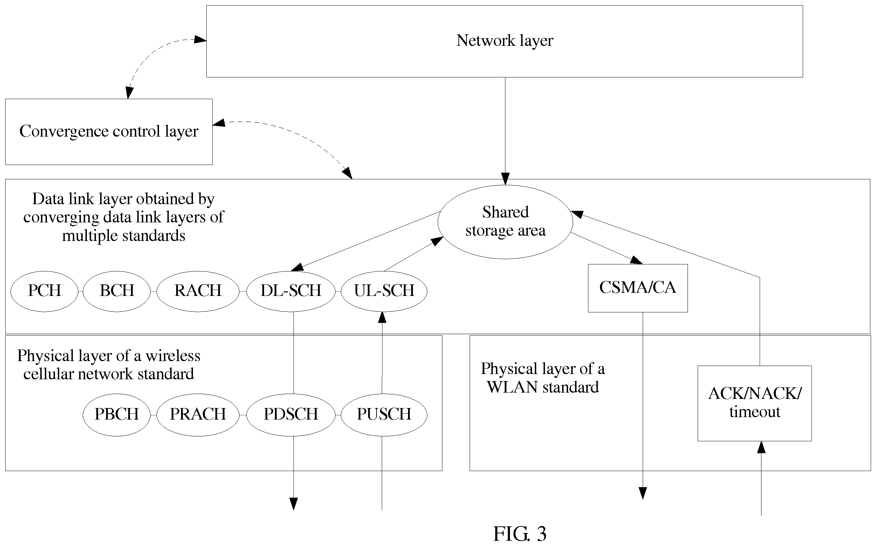

Exemplarily, the physical layer in FIG. 2 may be a hardware module such as a chip or a board. The convergence control layer may be an independent control network element (refer to FIG. 3), or may be software combined with the data link layer in FIG. 2. The network layer may be a Transmission Control Protocol/Internet Protocol (Transmission Control Protocol/Internet Protocol, TCP/IP Protocol) that runs in a CPU. The multiple communications standards supported by the data link layer in FIG. 2 specifically refer to software and hardware modules that run in a same physical entity and that have various control plane functions and data plane functions stipulated in different communications protocols. Specifically, at a new data link layer obtained by converging the data link layers of the multiple communications standards, a group of software programs simultaneously run on a communications board (generally, a multi-core processor architecture). Some programs in the program group are corresponding to an exclusive data link layer function of a first communications standard, some programs are corresponding to an exclusive data link layer function of a second communications standard, and some programs are corresponding to a data link layer function shared by the first communications standard and the second communications standard. The first communications standard and the second communications standard are different communications standards in the multiple communications standards. A Long Term Evolution (Long Term Evolution, LTE) Time Division Duplexing (Time Division Duplexing, TDD) communications standard and a WLAN communications standard are used as an example. Appropriately 30 percent of data link layer functions of the Long Term Evolution Time Division Duplexing communications standard and the WLAN communications standard may be shared, such as a rate adaptation function, a packet disassembly/assembly function, and an out-of-order reordering function. It should be noted that different system parameters are used for those shared data link layer functions when data of different communications standards is processed. The new data link layer obtained after convergence may be considered as a larger and more macroscopic sum of data link layers of different communications standards, a repetitive function of the different communications standards is removed, and an unified external interface is encapsulated at these data link layers. For a higher layer or a lower layer, only the new data link layer with the unified interface can be seen, and it is no longer distinguished which communication standard the data link layer is corresponding to which communication standard. The wireless communications control apparatus 10 (the convergence control layer shown in FIG. 2) is responsible for scheduling coordination work of the data link layers of the different communications standards under the unified interface.

It should be noted that the data link layer described in this embodiment of the present invention refers to a new data link layer obtained by converging data link layers of multiple communications standards. For brevity of description, a data link layer in the following specification is the foregoing new data link layer obtained after convergence unless otherwise stated.

Referring to FIG. 3, FIG. 3 is a schematic diagram of an implementation manner of a wireless communications control apparatus 10. A wireless cellular network standard and a WLAN standard are used as an example. A convergence control layer is physically independent, and may separately communicate with a data link layer and a network layer in FIG. 3. The data link layer obtained by converging data link layers of multiple standards includes: a paging channel (Paging Channel, PCH), a broadcast channel (Broadcast Channel, BCH), a random access channel (Random Access Channel, RACH), a downlink shared channel (Downlink Shared Channel, DL-SCH), an uplink shared channel (Uplink Shared Channel, UL-SCH), and carrier sense multiple access with collision avoidance (Carrier Sense Multiple Access with Collision Avoidance, CSMA/CA). A physical layer of the wireless cellular network standard includes a physical broadcast channel (Physical Broadcast Channel, PBCH), a physical random access channel (Physical Random Access Channel, PRACH), a physical downlink shared channel (Physical Downlink Shared Channel, PDSCH), and a physical uplink shared channel (Physical Uplink Shared Channel, PUSCH).

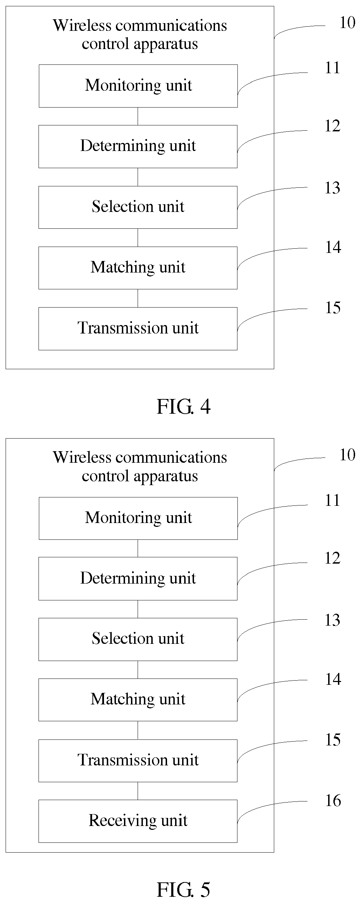

From another perspective, an embodiment of the present invention provides a wireless communications control apparatus 10. As shown in FIG. 4, the wireless communications control apparatus 10 may include a monitoring unit 11, a determining unit 12, a selection unit 13, a matching unit 14, and a transmission unit 15.

The monitoring unit 11 is configured to monitor link performance parameters respectively corresponding to multiple communications standards supported by a data link layer.

The determining unit 12 is configured to determine, according to a link performance parameter corresponding to a currently used communications standard, whether another communications standard needs to be used to transmit user data.

The selection unit 13 is configured to select, if the another communications standard needs to be used, a communications standard that needs to be used to transmit the user data.

The matching unit 14 is configured to perform parameter matching on the user data according to a system parameter corresponding to the selected communications standard.

The transmission unit 15 is configured to transmit the parameter-matched data by using the data link layer and a physical layer.

Exemplarily, with reference to the implementation manner shown in FIG. 2, the monitoring unit 11, the determining unit 12, the selection unit 13, and the matching unit 14 are at the data link layer shown in FIG. 2. The transmission unit 15 refers to a transmission channel that covers a network layer, the data link layer, and the physical layer. After packet disassembly/assembly, rate adaptation, and transmission channel allocation are performed on the data at the data link layer, the data is forwarded to the physical layer, and the data is sent by using the physical layer.

Optionally, the monitoring unit 11 may be specifically configured to:
monitor quantities of authenticated users who access a network, throughputs, or cache queue lengths respectively corresponding to the multiple communications standards supported by the data link layer.

Exemplarily, the monitoring unit 11 may monitor a quantity of authenticated users who access a network, a throughput, or a cache queue length of a wireless cellular network.

Optionally, the determining unit 12 may be specifically configured to:
compare a quantity of authenticated users who access a network, a throughput, or a cache queue length of the currently used communications standard with a corresponding preset threshold; and
if the quantity of authenticated users who access a network, the throughput, or the cache queue length is greater than the corresponding preset threshold, determine that the another communications standard needs to be used to transmit the user data.

Exemplarily, if the quantity that is of authenticated users who access the wireless cellular network and that is monitored by the monitoring unit 11 is 110, which is greater than a preset threshold 100, it may be determined that the wireless cellular network is overloaded, and the user data cannot be sent to a user terminal in time. Therefore, a WLAN needs to be used to send the user data.

Optionally, the selection unit 13 is specifically configured to:
select any one of other communications standards except the currently used communications standard to transmit the user data; or
select at least two communications standards in said other communications standards except the currently used communications standard to simultaneously transmit the user data according to a preset proportion; or
select the currently used communications standard and at least one communications standard in said other communications standards to simultaneously transmit the user data according to a preset proportion.

Exemplarily, if the wireless cellular network is overloaded, the WLAN may be selected to send the user data, or two standards: the WLAN and WiMAX may be selected to simultaneously transmit the user data. The user data is transmitted by using the two standards according to a specified proportion (for example, the two standards may separately assume 50 percent of the user data), or three standards: the wireless cellular network, the WLAN, and WiMAX may be selected to simultaneously transmit the user data. The user data is transmitted by using the three standards according to a specified proportion (for example, the wireless cellular network assumes 20 percent of the user data, the WLAN assumes 50 percent of the user data, and the WiMAX assumes remaining 30 percent of the user data). When multiple communications standards are selected to transmit the user data, the user data may be sent by using the multiple communications standards according to a proportion. A proportion assumed by each standard is selected from 0% to 100% according to an actual requirement. In this way, the multiple communications standards can be properly used, data transmission efficiency can be improved, and user experience can be enhanced.

Optionally, the matching unit 14 is specifically configured to:
perform packet length matching, quality of service matching (including rate matching), or security matching in different communications standards on the user data according to the system parameter corresponding to the selected communications standard.

The packet length matching means that a to-be-transmitted data packet from a first communications standard (for example, the wireless cellular network) is disassembled or assembled by a second communications standard (for example, the WLAN) into a data packet that complies with the second communications standard and that has a new length and a new format.

Exemplarily, in specific implementation, the packet length matching is classified into two cases: data sending and data receiving.

In the case of data sending, the packet length matching includes: the wireless communications control apparatus 10 obtains a first to-be-sent data packet from the network layer in a first communications standard; at the data link layer, the first data packet is disassembled according to a first system parameter of the first communications standard and according toa data packet length required by a physical layer corresponding to the first communications standard, to obtain several second data packets; if it is determined that a second communications standard is required to continue a sending process of the second data packets, the second data packets are assembled or disassembled at the data link layer according to a second system parameter of the second communications standard and according to a data packet length required by a physical layer corresponding to the second communications standard, to obtain several third data packets; the third data packets are sent to the physical layer of the second communications standard by using the data link layer, and sending of the data packets is completed by a transmitter at the physical layer.

In the case of data receiving, the packet length matching includes: the wireless communications control apparatus 10 receives a fourth data packet from a radio channel at the physical layer in a first communications standard; at the data link layer, the fourth data packet from a physical layer of the first communications standard is assembled according to a first system parameter corresponding to the first communications standard into a fifth data packet corresponding to the first communications standard; if it is determined that a second communications standard is required to continue a receiving process of the fifth data packet, the fifth data packet is assembled or disassembled at the data link layer according to a second system parameter of the second communications standard into a data packet length required by the network layer corresponding to the second communications standard, to obtain several sixth data packets; the sixth data packets are sent to the network layer by using the data link layer.

The quality of service QoS matching means that a first communications standard (for example, the wireless cellular network) notifies a second communications standard (for example, the WLAN) of a quality of service requirement parameter of a user in the first communications standard, and the second communications standard provides the user with a service according to the quality of service requirement parameter in the first communications standard. The quality of service requirement parameter includes but is not limited to a rate, a delay, or jitter.

Exemplarily, it is known that different QoS levels are separately defined for different communications standards. For example, priorities of eight QoS levels defined for LTE in the third generation partnership project (The 3rd Generation Partnership Project, 3GPP) are Level 0 to Level 7 in descending order. Priorities of four QoS levels defined for the WLAN are Voice (AC0), Video (AC1), Best Effort (AC2), and Background (AC3) in descending order.

The QoS matching includes: a network owner or a network operator defines a mapping relationship between different QoS levels of different communications standards, for example, Level 0 and Level 1 of 3GPP are appropriately equal to Voice (AC0) of the WLAN; the wireless communications control apparatus 10 obtains a first to-be-sent data packet from the network layer in a first communications standard; at the data link layer, it is determined that a first quality of service level of the first communications standard is to be used for the first data packet; the first data packet is disassembled at the data link layer according to a first system parameter of the first communications standard and according to a data packet length required by a physical layer corresponding to the first communications standard, to obtain several second data packets; if it is determined that a second communications standard is required to continue a sending process of the second data packets, the first quality of service level of the first communications standard is mapped into a second quality of service level of the second communications standard at the data link layer; a transmitter at the physical layer sends the data packets according to the second quality of service level by using the data link layer.

More specifically, the rate matching in the foregoing QoS matching means that a first communications standard (for example, the wireless cellular network) notifies a second communications standard (for example, the WLAN) of a data requirement rate and an actual rate of a user in the first communications standard, and the second communications standard provides, according to a carrying capability of the second communications standard, the user with a rate that is close to the data requirement rate in the first communications standard.

Exemplarily, the rate matching includes: in a first communications standard, the wireless communications control apparatus 10 obtains a first to-be-sent data packet from the network layer; at the data link layer, it is determined that a first modulation and coding scheme and a first multi-antenna spatial flow manner, that is, a first sending rate, that are determined by using a first system parameter in the first communications standard are to be used for the first data packet; the first data packet is disassembled at the data link layer according to the first system parameter of the first communications standard and according to a data packet length required by a physical layer corresponding to the first communications standard, to obtain several second data packets; if it is determined that a second communications standard is required to continue a sending process of the second data packets, at the data link layer, a second sending rate that is closest to the first sending rate is selected from a second system parameter of the second communications standard; at the data link layer, a second modulation and coding scheme and a second multi-antenna spatial flow manner that are used for subsequently sending the second data packets are obtained by means of mapping according to the second sending rate; a physical layer corresponding to the second communications standard is notified of the second modulation and coding scheme and the second multi-antenna spatial flow manner by using the data link layer, and sending of the data packets is completed by a transmitter at the physical layer.

The security matching means that a first communications standard (for example, the wireless cellular network) notifies a second communications standard (for example, the WLAN) of a security level of a user in the first communications standard, and the second communications standard provides the user with a service according to the security level in the first communications standard and feeds back the first communications standard. If a security level at which the second communications standard provides the user with a service cannot reach the security level in the first communications standard, the second communications standard is not used to provide the user with a service.

Exemplarily, the security matching includes: a network owner or a network operator defines a mapping relationship between different security levels of different communications standards; the wireless communications control apparatus 10 provides a user with a communications service in a first communications standard at a first security level; if it is determined that the first communications standard needs to be switched to a second communications standard, so as to provide the user with the communications service, whether the second communications standard can provide a second security level in the second communications standard that is not less except the first security level in the first communications standard is checked at the data link layer; and if the second communications standard can provide the second security level, the first communications standard is switched to the second communications standard; or if the second communications standard cannot provide the second security level, the first communications standard is not switched to the second communications standard.

Optionally, the matching unit 14 may be further specifically configured to:
if a communications standard that belongs to a first communications standard for which a spectrum resource reservation policy is used exists in the communications standard selected from the other communications standards, apply to a resource manager of the selected communications standard that belongs to the first communications standard for a transmission resource, and perform parameter matching on the user data after the transmission resource is obtained by application, where the first communications standard includes the wireless cellular network and Worldwide Interoperability for Microwave Access WiMAX.

Exemplarily, it is assumed that the determining unit 12 determines that the WLAN is overloaded, and the wireless cellular network needs to be used to send the user data. Because the spectrum resource reservation policy is used for the wireless cellular network, a resource manager of the wireless cellular network needs to be first applied to for a transmission resource, and after the transmission resource is obtained by application, packet length matching, rate matching, quality of service matching, and security matching in different communications standards are performed on all the user data or a part of the user data.

Optionally, as shown in FIG. 5, the wireless communications control apparatus 10 further includes:
a receiving unit 16, configured to receive an acknowledgement feedback message ACK or a non-acknowledgement feedback message NACK, where the acknowledgement feedback message is a message sent after a data receive end acknowledges that the data is correctly received, and the non-acknowledgement feedback message is a message sent after the data receive end acknowledges that the data is not correctly received.

Exemplarily, if a network side sends data to a user terminal, the user terminal sends an acknowledgement feedback message ACK to the wireless communications control apparatus 10 after correctly receiving the data, so that the wireless communications control apparatus 10 acknowledges that the data is successfully sent, and the user terminal sends a non-acknowledgement feedback message NACK to the wireless communications control apparatus 10 when the data is not correctly received, so that the wireless communications control apparatus 10 acknowledges that the data is not successfully sent, and needs to instruct the data link layer and the physical layer to re-send the data to the user terminal. In addition, if neither the ACK nor the NACK is received by the wireless communications control apparatus 10 within a preset time, it is considered as timeout (Timeout), and the data link layer and the physical layer need to be instructed to re-send the data to the user terminal.

It should be noted that the wireless communications control apparatus 10 provided in this embodiment of the present invention performs a corresponding function based on a data link layer, so that a dynamic response to a link status is more sensitive than that in the prior art in which network switching in multiple communications standards occurs at a network layer. In addition, in this embodiment of the present invention, data exchange is at the data link layer, while in the prior art, data exchange refers to IP session re-establishment, IP re-routing, IP forwarding, or IP header re-parsing. Therefore, a performance jitter time of service data is shorter, which can ensure seamless network switching in multiple communications standards and user experience consistency.

It should be further noted that, referring to FIG. 1a to FIG. 1d, this embodiment of the present invention further provides a base station, an access point (a name is not limited), or a terminal such as a smartphone, a tablet computer, or a portable computer that includes the wireless communications control apparatus 10 and that is on a network side.

In addition, a terminal mentioned in each embodiment may also be referred to as a system, a subscriber unit, a subscriber station, a mobile station, a remote station, a remote terminal, a mobile device, a user terminal, a terminal, a wireless communications device, a user agent, a user apparatus, or UE (User Equipment, user equipment). The terminal may be a cellular phone, a cordless phone, a SIP (Session Initiation Protocol, Session Initiation Protocol) phone, a WLL (Wireless Local Loop, wireless local loop) station, a PDA (Personal Digital Assistant, personal digital assistant), a handheld device having a wireless communication function, a computing device, or another processing device connected to a wireless modem. Alternatively, the terminal may be an in-vehicle device or a wearable device.

According to the wireless communications control apparatus provided in this embodiment of the present invention, link performance parameters respectively corresponding to multiple communications standards supported by a data link layer are monitored first, then whether another communications standard needs to be used to transmit user data is determined according to a link performance parameter corresponding to a currently used communications standard, and if the another communications standard needs to be used, a communications standard that needs to be used to transmit the user data is selected, then parameter matching is performed on the user data according to a system parameter corresponding to the selected communications standard, and the parameter-matched data is transmitted by using the data link layer and a physical layer. In this way, different communications standards can be used to provide a user with a service, which can avoid temporary traffic flow interruption in a user terminal, and ensure user experience consistency. Therefore, overall efficiency of a communications system is higher.

Further, it may be learned from the foregoing implementation manners that a control function of a wireless communications control apparatus 10 is at a data link layer instead of an IP layer. In this way, a dynamic response to a link status may be more sensitive, and therefore, a decision of switching between different standards may be quicker.

In addition, it may be learned from the foregoing implementation manners that for a data exchange process, the data link layer includes a data storage area, and no processing needs to be performed at the IP layer. Therefore, processes such as IP session re-establishment, IP re-routing, IP forwarding, and IP header re-parsing are not required. Therefore, in the implementation manners of the present invention, a performance jitter time of service data is shorter. In other words, a process of performing wireless communication switching between different standards can be quicker.

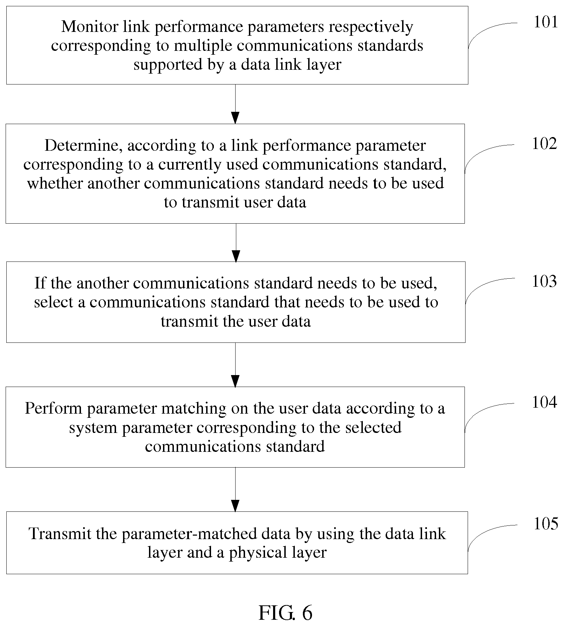

An embodiment of the present invention provides a network communication method. As shown in FIG. 6, the method includes the following steps.

Step 101: Monitor link performance parameters respectively corresponding to multiple communications standards supported by a data link layer.

Step 102: Determine, according to a link performance parameter corresponding to a currently used communications standard, whether another communications standard needs to be used to transmit user data.

Step 103: If the another communications standard needs to be used, select a communications standard that needs to be used to transmit the user data.

Step 104: Perform parameter matching on the user data according to a system parameter corresponding to the selected communications standard.

The parameter matching includes but is not limited to rate matching, packet length matching, quality of service matching, or security matching.

Step 105: Transmit the parameter-matched data by using the data link layer and a physical layer.

According to the network communication method provided in this embodiment of the present invention, different communications standards can be used to provide a user with a service, which can avoid temporary traffic flow interruption in a user terminal, and ensure user experience consistency. Therefore, overall efficiency of a communications system is higher.

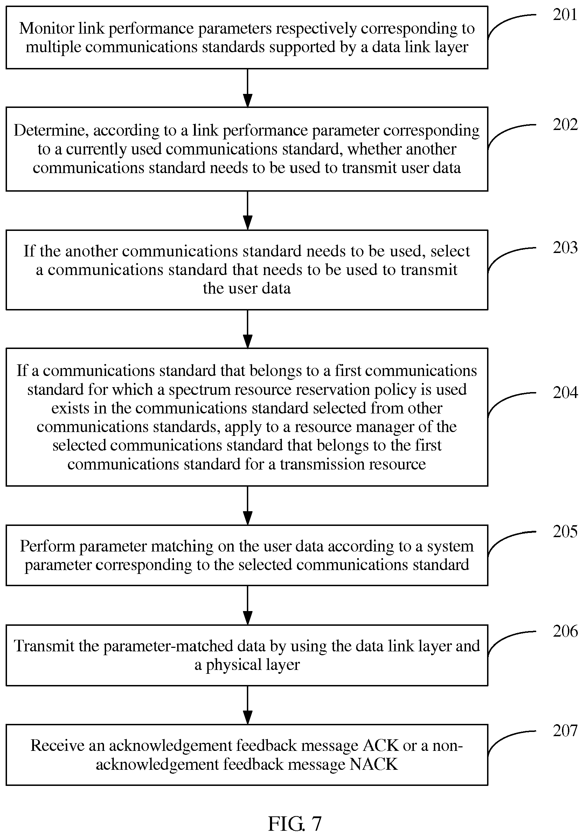

To make a person skilled in the art more clearly understand technical solutions provided in the embodiments of the present invention, the following describes in detail, by using a specific embodiment, a network communication method according to an embodiment of the present invention. As shown in FIG. 7, the method includes the following steps.

Step 201: Monitor link performance parameters respectively corresponding to multiple communications standards supported by a data link layer.

The data link layer supports multiple communications standards, and the multiple communications standards include a wireless cellular network, a wireless local area network WLAN, Worldwide Interoperability for Microwave Access WiMAX, Bluetooth, and an infrared ray.

Specifically, as shown in FIG. 2 and as described above, the data link layer is obtained by converging data link layers of the multiple communications standards, and communications protocols of the multiple communications standards are simultaneously run at the data link layer, and details are not described herein. A link performance parameter of a communications standard may include one or a combination of a throughput, a cache queue length, or a quantity of authenticated users who access a network.

Step 202: Determine, according to a link performance parameter corresponding to a currently used communications standard, whether another communications standard needs to be used to transmit user data.

Specifically, a quantity of authenticated users who access a network, a throughput, or a cache queue length of the currently used communications standard is compared with a corresponding preset threshold; and
if the quantity of authenticated users who access a network, the throughput, or the cache queue length is greater than the corresponding preset threshold, it is determined that different communications standards need to be used to transmit all the user data or a part of the user data.

Exemplarily, if a monitored quantity of authenticated users who access a wireless cellular network is 110, which is greater than a preset threshold 100, it may be determined that the wireless cellular network is overloaded, and the user data cannot be sent to a user terminal in time. Therefore, a WLAN needs to be used to send the user data.

Step 203: If the another communications standard needs to be used, select a communications standard that needs to be used to transmit the user data.

Any one of other communications standards except the currently used communications standard is selected to transmit the user data; or
at least two communications standards in said other communications standards except the currently used communications standard are selected to simultaneously transmit the user data according to a preset proportion; or
the currently used communications standard and at least one communications standard in said other communications standards are selected to simultaneously transmit the user data according to a preset proportion.

Exemplarily, if the wireless cellular network is overloaded, the WLAN may be selected to send the user data, or two standards: the WLAN and WiMAX may be selected to simultaneously transmit the user data. The user data is transmitted by using the two standards according to a specified proportion (for example, the two standards may separately assume 50 percent of the user data), or three standards: the wireless cellular network, the WLAN, and WiMAX may be selected to simultaneously transmit the user data. The user data is transmitted by using the three standards according to a specified proportion (for example, the wireless cellular network assumes 20 percent of the user data, the WLAN assumes 50 percent of the user data, and the WiMAX assumes remaining 30 percent of the user data). When multiple communications standards are selected to transmit the user data, the user data may be sent by using the multiple communications standards according to a proportion. A proportion assumed by each standard is selected from 0% to 100% according to an actual requirement. In this way, the multiple communications standards can be properly used, data transmission efficiency can be improved, and user experience can be enhanced.

Step 204: If a communications standard that belongs to a first communications standard for which a spectrum resource reservation policy is used exists in the communications standard selected from other communications standards, apply to a resource manager of the selected communications standard that belongs to the first communications standard for a transmission resource.

The first communications standard includes a wireless cellular network and Worldwide Interoperability for Microwave Access WiMAX.

Exemplarily, it is assumed that the WLAN is overloaded, and the wireless cellular network needs to be used to send the user data. Because the spectrum resource reservation policy is used for the wireless cellular network, a resource manager of the wireless cellular network needs to be first applied to for a transmission resource, and the data can be transmitted by using the obtained transmission resource by application only after the transmission resource is obtained by application.

Step 205: Perform parameter matching on the user data according to a system parameter corresponding to the selected communications standard.

Specifically, the parameter matching includes but is not limited to packet length matching, rate matching, quality of service matching, or security matching. For details of the foregoing parameter matching, reference may be made to descriptions of the foregoing matching unit 14, and details are not described herein again.

Step 206: Transmit the parameter-matched data by using the data link layer and a physical layer.

Exemplarily, after packet disassembly/assembly, rate adaptation, and transmission channel allocation are performed on the data at the data link layer, the data is forwarded to the physical layer, and the data is sent by using the physical layer.

Step 207: Receive an acknowledgement feedback message ACK or a non-acknowledgement feedback message NACK.

The acknowledgement feedback message is a message sent after a data receive end acknowledges that the data is correctly received. The non-acknowledgement feedback message is a message sent after the data receive end acknowledges that the data is not correctly received.

Exemplarily, if a network side on which a wireless communications control apparatus 10 is located sends data to a user terminal, the user terminal sends an acknowledgement feedback message ACK to the wireless communications control apparatus 10 after correctly receiving the data, so that the wireless communications control apparatus 10 acknowledges that the data is successfully sent, and the user terminal sends a non-acknowledgement feedback message NACK to the wireless communications control apparatus 10 when the data is not correctly received, so that the wireless communications control apparatus 10 acknowledges that the data is not successfully sent, and needs to instruct the data link layer and the physical layer to re-send the data to the user terminal. In addition, if neither the ACK nor the NACK is received by the wireless communications control apparatus 10 within a preset time, it is considered as timeout (Timeout), and the data link layer and the physical layer need to be instructed to re-send the data to the user terminal.

To make a person skilled in the art more clearly understand technical solutions provided in the embodiments of the present invention, the following describes in detail, by using specific embodiments, the network communication method in multiple communications standards provided in the foregoing embodiment of the present invention. For ease of description, the multiple communications standards are simplified into two standards: a wireless cellular network and a WLAN, and a throughput is used as an example of a link performance parameter.

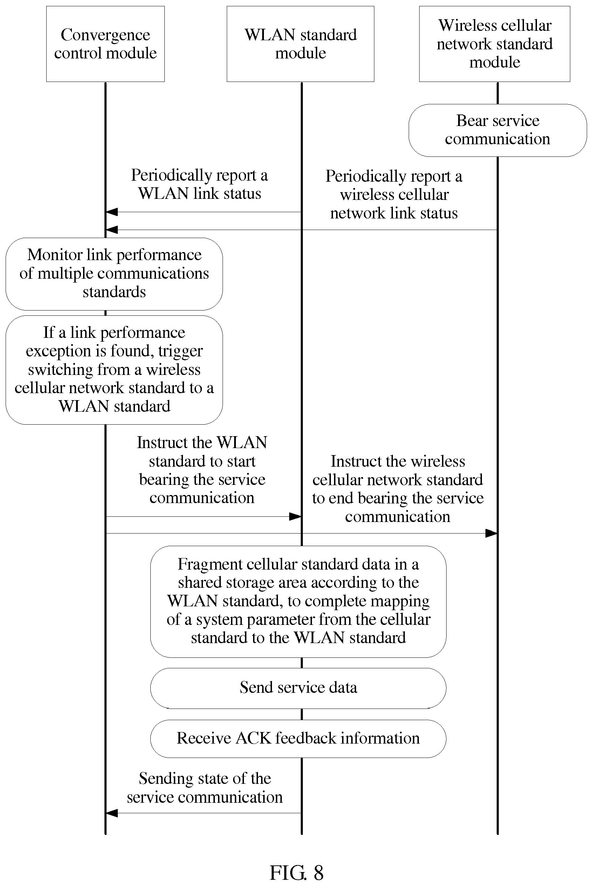

Referring to FIG. 8, a wireless communications control apparatus 10 includes a convergence control module, a WLAN standard module, and a wireless cellular network standard module (a person skilled in the art knows that the foregoing module division is function division for clearly describing a solution). The convergence control module monitors a throughput of a wireless cellular network standard and a throughput of a WLAN standard. If it is determined that the throughput of the wireless cellular network standard exceeds a specified threshold, the WLAN standard is selected to transmit a part of user data (in actual application, a communications standard by using which the user data is transmitted according to a proportion is determined according to a specified rule). Parameter matching between the wireless cellular network standard and the WLAN standard is performed on data transmitted by using the WLAN standard. Then, after processing such as packet encapsulation processing and channel allocation on the part of data is completed at a data link layer, a transmitter at a physical layer sends the part of data to a receiving device.

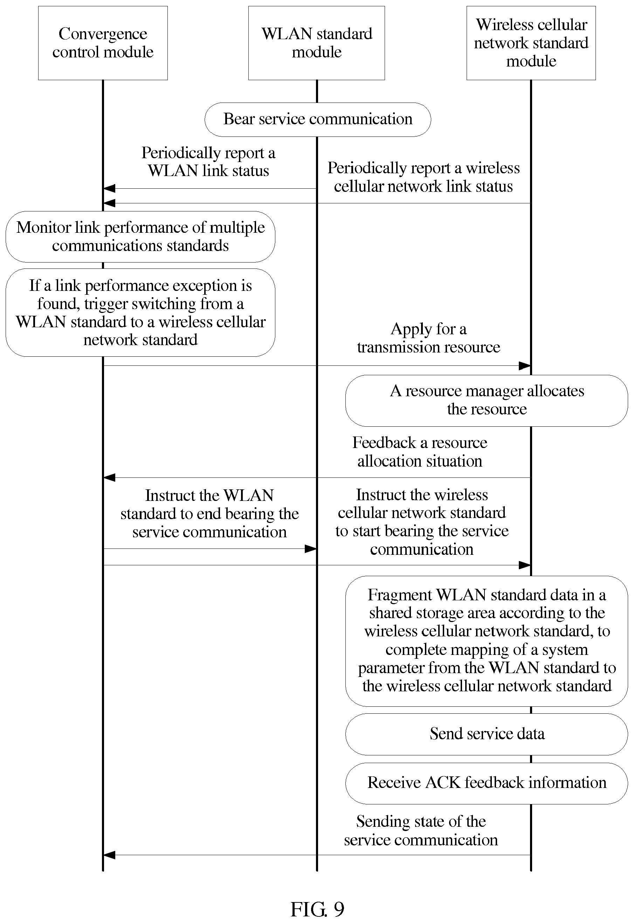

Referring to FIG. 9, a wireless communications control apparatus 10 includes a convergence control module, a WLAN standard module, and a wireless cellular network standard module (a person skilled in the art knows that the foregoing module division is function division for clearly describing a solution). The convergence control module monitors a throughput of a wireless cellular network standard and a throughput of a WLAN standard. If it is determined that the throughput of the WLAN standard exceeds a specified threshold, the wireless cellular network standard is selected to transmit a part of user data (in actual application, a communications standard by using which the user data is transmitted according to a proportion is determined according to a specified rule). Because a spectrum resource reservation policy is used for the wireless cellular network standard, a resource manager of a wireless cellular network needs to be first applied to for a transmission resource before the data is transmitted. After the transmission resource is obtained by application, parameter matching between the wireless cellular network standard and the WLAN standard is performed on data transmitted by using the wireless cellular network standard. Then, after processing such as packet encapsulation processing and channel allocation on the part of data is completed at a data link layer, a transmitter at a physical layer sends the part of data to a receiving device.

According to the network communication method provided in this embodiment of the present invention, link performance parameters respectively corresponding to multiple communications standards supported by a data link layer are monitored first, then whether another communications standard needs to be used to transmit user data is determined according to a link performance parameter corresponding to a currently used communications standard, and if the another communications standard needs to be used, a communications standard that needs to be used to transmit the user data is selected, then parameter matching is performed on the user data according to a system parameter corresponding to the selected communications standard, and the parameter-matched data is transmitted by using the data link layer and a physical layer. In this way, different communications standards can be used to provide a user with a service, which can avoid temporary traffic flow interruption in a user terminal, and ensure user experience consistency. Therefore, overall efficiency of a communications system is higher.

Finally, only a wireless cellular network standard and a WLAN standard are used as an example in the technical solutions provided in the foregoing embodiments. The solutions provided in the embodiments of the present invention support communications standards such as the wireless cellular network standard, the WLAN standard, a WiMAX standard, Bluetooth, and an infrared ray. A person skilled in the art may implement network switching in the foregoing communications standards based on the technical solutions provided in the embodiments of the present invention without creative efforts.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, refer to a corresponding process in the foregoing method embodiments, and details are not described herein again.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments within the scope of the attached claims.

## Claims

1. A wireless communications control apparatus (10), comprising:
a monitoring unit (11), configured to monitor link performance parameters respectively corresponding to multiple communications standards , wherein the multiple communications standards are supported by a data link layer;
a determining unit (12), configured to determine, according to a link performance parameter corresponding to a currently used communications standard, whether another communications standard needs to be used to transmit user data;
a selection unit (13), configured to select, if the another communications standard needs to be used, a communications standard that needs to be used to transmit the user data; wherein the selection unit (13) is specifically configured to:
select at least two communications standards in other communications standards except the currently used communications standard to simultaneously transmit the user data according to a preset proportion; or
select the currently used communications standard and at least one communications standard in said other communications standards to simultaneously transmit the user data according to a preset proportion;
a matching unit (14), configured to perform parameter matching on the user data according to a system parameter corresponding to the selected communications standard; and
a transmission unit (15), configured to transmit the data which is obtained after the parameter-matching processing by using the data link layer and a physical layer.

2. The apparatus according to claim 1, wherein the matching unit (14) is specifically configured to:
perform rate matching, packet length matching, quality of service matching, or security matching on the user data according to the system parameter corresponding to the selected communications standard.

3. The apparatus (10) according to claim 1 or 2, wherein the monitoring unit (11) is specifically configured to:
monitor quantities of authenticated users who access a network, throughputs, or cache queue lengths respectively corresponding to the multiple communications standards supported by the data link layer.

4. The apparatus (10) according to claim 3, wherein the determining unit (12) is specifically configured to:
compare a quantity of authenticated users who access a network, a throughput, or a cache queue length of the currently used communications standard with a corresponding preset threshold; and
if the quantity of authenticated users who access a network, the throughput, or the cache queue length is greater than the corresponding preset threshold, determine that the another communications standard needs to be used to transmit the user data.

5. The apparatus (10) according to claim 1, wherein the matching unit (14) is further specifically configured to:
if a communications standard that belongs to a first communications standard for which a spectrum resource reservation policy is used exists in the communications standard selected from the other communications standards, apply to a resource manager of the selected communications standard that belongs to the first communications standard for a transmission resource, and perform parameter matching on the user data after the transmission resource is obtained by application, wherein the first communications standard comprises a wireless cellular network and Worldwide Interoperability for Microwave Access, WiMAX.

6. The apparatus (10) according to claim 1, wherein the apparatus further comprises:
a receiving unit (16), configured to receive an acknowledgement feedback message ACK or a non-acknowledgement feedback message NACK, wherein the acknowledgement feedback message is a message sent after a data receive end acknowledges that the data is correctly received, and the non-acknowledgement feedback message is a message sent after the data receive end acknowledges that the data is not correctly received.

7. A user terminal, comprising the wireless communications control apparatus according to any one of claims 1 to 6.

8. A base station, comprising the wireless communications control apparatus according to any one of claims 1 to 6.

9. A network communication method, comprising:
monitoring (101, 201) link performance parameters respectively corresponding to multiple communications standards, wherein the multiple communications standards is supported by a data link layer;
determining (102, 202), according to a link performance parameter corresponding to a currently used communications standard, whether another communications standard needs to be used to transmit user data;
selecting (103, 203), if the another communications standard needs to be used, a communications standard that needs to be used to transmit the user data;
wherein the selecting a communications standard that needs to be used to transmit the user data comprises:
selecting at least two communications standards in other communications standards except the currently used communications standard to simultaneously transmit the user data according to a preset proportion; or
selecting the currently used communications standard and at least one communications standard in said other communications standards to simultaneously transmit the user data according to a preset proportion;
performing (104, 205) parameter matching on the user data according to a system parameter corresponding to the selected communications standard; and
transmitting (105, 206) the data which is obtained after the parameter-matching processing by using the data link layer and a physical layer.

10. The method according to claim 9, wherein the performing (104, 205) parameter matching on the user data according to a system parameter corresponding to the selected communications standard comprises:
performing rate matching, packet length matching, quality of service matching, or security matching on the user data according to the system parameter corresponding to the selected communications standard.

11. The method according to claim 9 or 10, wherein the monitoring (101, 201) link performance parameters respectively corresponding to multiple communications standards supported by a data link layer comprises:
monitoring quantities of authenticated users who access a network, throughputs, or cache queue lengths respectively corresponding to the multiple communications standards supported by the data link layer.

12. The method according to claim 11, wherein the determining (102, 202), according to a link performance parameter corresponding to a currently used communications standard, whether another communications standard needs to be used to transmit user data comprises:
comparing a quantity of authenticated users who access a network, a throughput, or a cache queue length of the currently used communications standard with a corresponding preset threshold; and
if the quantity of authenticated users who access a network, the throughput, or the cache queue length is greater than the corresponding preset threshold, determining that the another communications standard needs to be used to transmit the user data.

13. The method according to claim 9, wherein the performing parameter matching in different communications standards on the user data according to the selected communications standard comprises:
if a communications standard that belongs to a first communications standard for which a spectrum resource reservation policy is used exists in the communications standard selected from the other communications standards, applying (204) to a resource manager of the selected communications standard that belongs to the first communications standard for a transmission resource, and performing parameter matching on the user data after the transmission resource is obtained by application, wherein the first communications standard comprises a wireless cellular network and Worldwide Interoperability for Microwave Access, WiMAX.

14. The method according to claim 9, wherein the method further comprises:
receiving (207) an acknowledgement feedback message ACK or a non-acknowledgement feedback message NACK, wherein the acknowledgement feedback message is a message sent after a data receive end acknowledges that the data is correctly received, and the non-acknowledgement feedback message is a message sent after the data receive end acknowledges that the data is not correctly received.

## Patentansprüche

1. Drahtloskommunikation-Steuervorrichtung (10), die Folgendes umfasst:
eine Überwachungseinheit (11), die ausgelegt ist zum Überwachen von Verbindungsleistungsparametern, die jeweils mehreren Kommunikationsstandards entsprechen, wobei die mehreren Kommunikationsstandards durch eine Datenverbindungsschicht unterstützt werden;
eine Bestimmungseinheit (12), die ausgelegt ist zum Bestimmen, gemäß einem Verbindungsleistungsparameter, der einem gegenwärtig verwendeten Kommunikationsstandard entspricht, ob ein anderer Kommunikationsstandard verwendet werden muss, um Benutzerdaten zu übertragen;
eine Auswahleinheit (13), die ausgelegt ist zum Auswählen, falls der andere Kommunikationsstandard verwendet werden muss, eines Kommunikationsstandards, der verwendet werden muss, um die Benutzerdaten zu übertragen; wobei die Auswahleinheit (13) spezifisch zu Folgendem ausgelegt ist:
Auswählen von mindestens zwei Kommunikationsstandards in anderen Kommunikationsstandards außer dem gegenwärtig verwendeten Kommunikationsstandard, um die Benutzerdaten gemäß einem voreingestellten Anteil gleichzeitig zu übertragen; oder
Auswählen des gegenwärtig verwendeten Kommunikationsstandards und von mindestens einem Kommunikationsstandard in den anderen Kommunikationsstandards, um die Benutzerdaten gemäß einem voreingestellten Anteil gleichzeitig zu übertragen;
eine Abgleichungseinheit (14), die ausgelegt ist zum Durchführen eines Parameterabgleichs an den Benutzerdaten gemäß einem Systemparameter, der dem ausgewählten Kommunikationsstandard entspricht; und
eine Übertragungseinheit (15), die ausgelegt ist zum Übertragen der Daten, die nach der Parameterabgleichungsverarbeitung erhalten werden, unter Verwendung der Datenverbindungsschicht und einer Bitübertragungsschicht.

2. Vorrichtung nach Anspruch 1, wobei die Abgleichungseinheit (14) spezifisch zu Folgendem ausgelegt ist:
Durchführen eines Ratenabgleichs, eines Paketlängenabgleichs, eines Dienstqualitätsabgleichs oder eines Sicherheitsabgleichs an den Benutzerdaten gemäß dem Systemparameter, der dem ausgewählten Kommunikationsstandard entspricht.

3. Vorrichtung (10) nach Anspruch 1 oder 2, wobei die Überwachungseinheit (11) spezifisch zu Folgendem ausgelegt ist:
Überwachen von Mengen von authentifizierten Benutzern, die auf ein Netzwerk zugreifen, von Durchsätzen oder von Cache-Warteschlangenlängen, die jeweils den mehreren Kommunikationsstandards, die durch die Datenverbindungsschicht unterstützt werden, entsprechen.

4. Vorrichtung (10) nach Anspruch 3, wobei die Bestimmungseinheit (12) spezifisch zu Folgendem ausgelegt ist:
Vergleichen einer Menge von authentifizierten Benutzern, die auf ein Netzwerk zugreifen, eines Durchsatzes oder einer Cache-Warteschlangenlänge des gegenwärtig verwendeten Kommunikationsstandards mit einer entsprechenden voreingestellten Schwelle und,
falls die Menge von authentifizierten Benutzern, die auf ein Netzwerk zugreifen, der Durchsatz oder die Cache-Warteschlangenlänge größer als die entsprechende voreingestellte Schwelle ist, Bestimmen, dass der andere Kommunikationsstandard verwendet werden muss, um die Benutzerdaten zu übertragen.

5. Vorrichtung (10) nach Anspruch 1, wobei die Abgleichungseinheit (14) ferner spezifisch zu Folgendem ausgelegt ist:
falls ein Kommunikationsstandard, der zu einem ersten Kommunikationsstandard gehört, für den eine Spektrumressourcen-Reservierungsrichtlinie verwendet wird, im Kommunikationsstandard vorhanden ist, der aus den anderen Kommunikationsstandards ausgewählt wird, Beantragen einer Übertragungsressource bei einem Ressourcenmanager des ausgewählten Kommunikationsstandards, der zum ersten Kommunikationsstandard gehört, und Durchführen eines Parameterabgleichs an den Benutzerdaten, nachdem die Übertragungsressource durch die Beantragung erhalten wird, wobei der erste Kommunikationsstandard ein drahtloses zellulares Netzwerk und "Worldwide Interoperability for Microwave Access" bzw. WiMAX umfasst.

6. Vorrichtung (10) nach Anspruch 1, wobei die Vorrichtung ferner Folgendes umfasst:
eine Empfangseinheit (16), die ausgelegt ist zum Empfangen einer Bestätigungsrückmeldenachricht ACK oder einer Nicht-Bestätigungsrückmeldenachricht NACK, wobei die Bestätigungsrückmeldenachricht eine Nachricht ist, die gesendet wird, nachdem ein Datenempfangsende bestätigt, dass die Daten korrekt empfangen werden, und die Nicht-Bestätigungsrückmeldenachricht eine Nachricht ist, die gesendet wird, nachdem das Datenempfangsende bestätigt, dass die Daten nicht korrekt empfangen werden.

7. Benutzerendgerät, das die Drahtloskommunikation-Steuervorrichtung nach einem der Ansprüche 1 bis 6 umfasst.

8. Basisstation, die die Drahtloskommunikation-Steuervorrichtung nach einem der Ansprüche 1 bis 6 umfasst.

9. Netzwerkkommunikationsverfahren, das Folgendes umfasst:
Überwachen (101, 201) von Verbindungsleistungsparametern, die jeweils mehreren Kommunikationsstandards entsprechen, wobei die mehreren Kommunikationsstandards durch eine Datenverbindungsschicht unterstützt werden;
Bestimmen (102, 202), gemäß einem Verbindungsleistungsparameter, der einem gegenwärtig verwendeten Kommunikationsstandard entspricht, ob ein anderer Kommunikationsstandard verwendet werden muss, um Benutzerdaten zu übertragen;
Auswählen (103, 203), falls der andere Kommunikationsstandard verwendet werden muss, eines Kommunikationsstandards, der verwendet werden muss, um die Benutzerdaten zu übertragen;
wobei das Auswählen eines Kommunikationsstandards, der verwendet werden muss, um die Benutzerdaten zu übertragen, Folgendens umfasst:
Auswählen von mindestens zwei Kommunikationsstandards in anderen Kommunikationsstandards außer dem gegenwärtig verwendeten Kommunikationsstandard, um die Benutzerdaten gemäß einem voreingestellten Anteil gleichzeitig zu übertragen; oder
Auswählen des gegenwärtig verwendeten Kommunikationsstandards und von mindestens einem Kommunikationsstandard in den anderen Kommunikationsstandards, um die Benutzerdaten gemäß einem voreingestellten Anteil gleichzeitig zu übertragen;
Durchführen (104, 205) eines Parameterabgleichs an den Benutzerdaten gemäß einem Systemparameter, der dem ausgewählten Kommunikationsstandard entspricht; und
Übertragen (105, 206) der Daten, die nach der Parameterabgleichungsverarbeitung erhalten werden, unter Verwendung der Datenverbindungsschicht und einer Bitübertragungsschicht.

10. Verfahren nach Anspruch 9, wobei das Durchführen (104, 205) eines Parameterabgleichs an den Benutzerdaten gemäß einem Systemparameter, der dem ausgewählten Kommunikationsstandard entspricht, Folgendes umfasst:
Durchführen eines Ratenabgleichs, eines Paketlängenabgleichs, eines Dienstqualitätsabgleichs oder eines Sicherheitsabgleichs an den Benutzerdaten gemäß dem Systemparameter, der dem ausgewählten Kommunikationsstandard entspricht.

11. Verfahren nach Anspruch 9 oder 10, wobei das Überwachen (101, 201) von Verbindungsleistungsparametern, die jeweils mehreren Kommunikationsstandards entsprechen, die durch eine Datenverbindungsschicht unterstützt werden, Folgendes umfasst:
Überwachen von Mengen von authentifizierten Benutzern, die auf ein Netzwerk zugreifen, von Durchsätzen oder von Cache-Warteschlangenlängen, die jeweils den mehreren Kommunikationsstandards, die durch die Datenverbindungsschicht unterstützt werden, entsprechen.

12. Verfahren nach Anspruch 11, wobei das Bestimmen (102, 202), gemäß einem Verbindungsleistungsparameter, der einem gegenwärtig verwendeten Kommunikationsstandard entspricht, ob ein anderer Kommunikationsstandard verwendet werden muss, um Benutzerdaten zu übertragen, Folgendes umfasst:
Vergleichen einer Menge von authentifizierten Benutzern, die auf ein Netzwerk zugreifen, eines Durchsatzes oder einer Cache-Warteschlangenlänge des gegenwärtig verwendeten Kommunikationsstandards mit einer entsprechenden voreingestellten Schwelle und;
falls die Menge von authentifizierten Benutzern, die auf ein Netzwerk zugreifen, der Durchsatz oder die Cache-Warteschlangenlänge größer als die entsprechende voreingestellte Schwelle ist, Bestimmen, dass der andere Kommunikationsstandard verwendet werden muss, um die Benutzerdaten zu übertragen.

13. Verfahren nach Anspruch 9, wobei das Durchführen eines Parameterabgleichs in unterschiedlichen Kommunikationsstandards an den Benutzerdaten gemäß dem ausgewählten Kommunikationsstandard Folgendes umfasst:
falls ein Kommunikationsstandard, der zu einem ersten Kommunikationsstandard gehört, für den eine Spektrumressourcen-Reservierungsrichtlinie verwendet wird, im Kommunikationsstandard vorhanden ist, der aus den anderen Kommunikationsstandards ausgewählt wird, Beantragen (204) einer Übertragungsressource bei einem Ressourcenmanager des ausgewählten Kommunikationsstandards, der zum ersten Kommunikationsstandard gehört, und Durchführen eines Parameterabgleichs an den Benutzerdaten, nachdem die Übertragungsressource durch die Beantragung erhalten wird, wobei der erste Kommunikationsstandard ein drahtloses zellulares Netzwerk und "Worldwide Interoperability for Microwave Access" bzw. WiMAX umfasst.

14. Verfahren nach Anspruch 9, wobei das Verfahren ferner Folgendes umfasst:
Empfangen (207) einer Bestätigungsrückmeldenachricht ACK oder einer Nicht-Bestätigungsrückmeldenachricht NACK, wobei die Bestätigungsrückmeldenachricht eine Nachricht ist, die gesendet wird, nachdem ein Datenempfangsende bestätigt, dass die Daten korrekt empfangen werden, und die Nicht-Bestätigungsrückmeldenachricht eine Nachricht ist, die gesendet wird, nachdem das Datenempfangsende bestätigt, dass die Daten nicht korrekt empfangen werden.

## Revendications

1. Appareil (10) de commande de communications sans fil, comportant :
une unité (11) de surveillance, configurée pour surveiller des paramètres de performances de liaison correspondant respectivement à des normes multiples de communications, les normes multiples de communications étant prises en charge par une couche de liaison de données ; une unité (12) de détermination, configurée pour déterminer, d'après un paramètre de performances de liaison correspondant à une norme de communications actuellement utilisée, si une autre norme de communications doit être utilisée pour émettre des données d'utilisateur ;
une unité (13) de sélection, configurée pour select, si ladite autre norme de communications doit être utilisée, une norme de communications qui doit être utilisée pour émettre les données d'utilisateur ;
l'unité (13) de sélection étant spécifiquement configurée pour :
sélectionner au moins deux normes de communications parmi d'autres normes de communications à l'exception de la norme de communications actuellement utilisée pour émettre simultanément les données d'utilisateur d'après une proportion prédéfinie ; ou
sélectionner la norme de communications actuellement utilisée et au moins une norme de communications parmi lesdites autres normes de communications pour émettre simultanément les données d'utilisateur d'après une proportion prédéfinie ;
une unité (14) d'adaptation, configurée pour effectuer une adaptation de paramètres sur les données d'utilisateur d'après un paramètre de système correspondant à la norme de communications sélectionnée ; et
une unité (15) d'émission, configurée pour émettre les données qui sont obtenues après le traitement d'adaptation de paramètres en utilisant la couche de liaison de données et une couche physique.

2. Appareil selon la revendication 1, l'unité (14) d'adaptation étant spécifiquement configurée pour :
effectuer une adaptation de débit, une adaptation de longueur de paquets, une adaptation de qualité de service ou une adaptation de sécurité sur les données d'utilisateur d'après le paramètre de système correspondant à la norme de communications sélectionnée.

3. Appareil (10) selon la revendication 1 ou 2, l'unité (11) de surveillance étant spécifiquement configurée pour :
surveiller des quantités d'utilisateurs authentifiés qui accèdent à un réseau, des capacités ou des longueurs de file d'attente d'antémémoire correspondant respectivement aux normes multiples de communications prises en charge par la couche de liaison de données.

4. Appareil (10) selon la revendication 3, l'unité (12) de détermination étant spécifiquement configurée pour :
comparer une quantité d'utilisateurs authentifiés qui accèdent à un réseau, une capacité ou une longueur de file d'attente d'antémémoire de la norme de communications actuellement utilisée avec un seuil prédéfini correspondant ; et
si la quantité d'utilisateurs authentifiés qui accèdent à un réseau, la capacité ou la longueur de file d'attente d'antémémoire est supérieure au seuil prédéfini correspondant, déterminer que ladite autre norme de communications doit être utilisée pour émettre les données d'utilisateur.

5. Appareil (10) selon la revendication 1, l'unité (14) d'adaptation étant en outre spécifiquement configurée pour :
si une norme de communications qui appartient à une première norme de communications pour laquelle une politique de réservation de ressources de spectre est utilisée existe dans la norme de communications sélectionnée parmi les autres normes de communications, solliciter un gestionnaire de ressources de la norme de communications sélectionnée qui appartient à la première norme de communications pour obtenir une ressource d'émission, et effectuer une adaptation de paramètres sur les données d'utilisateur après que la ressource d'émission a été obtenue par sollicitation, la première norme de communications comportant un réseau cellulaire sans fil et l'Interopérabilité mondiale des accès à hyperfréquence, WiMAX.

6. Appareil (10) selon la revendication 1, l'appareil comportant en outre :
une unité (16) de réception, configurée pour recevoir un message de retour d'accusé de réception ACK ou un message de retour de non-accusé de réception NACK, le message de retour d'accusé de réception étant un message émis après qu'une extrémité de réception de données confirme que les données ont été reçues correctement, et le message de retour de non-accusé de réception étant un message émis après que l'extrémité de réception de données confirme que les données n'ont pas été reçues correctement.

7. Terminal d'utilisateur, comportant l'appareil de commande de communications sans fil selon l'une quelconque des revendications 1 à 6.

8. Station de base, comportant l'appareil de commande de communications sans fil selon l'une quelconque des revendications 1 à 6.

9. Procédé de communication en réseau, comportant les étapes consistant à :
surveiller (101, 201) paramètres de performances de liaison correspondant respectivement à des normes multiples de communications, les normes multiples de communications étant prises en charge par une couche de liaison de données ;
déterminer (102, 202), d'après un paramètre de performances de liaison correspondant à une norme de communications actuellement utilisée, si une autre norme de communications doit être utilisée pour émettre des données d'utilisateur ;
sélectionner (103, 203), si ladite autre norme de communications doit être utilisée, une norme de communications qui doit être utilisée pour émettre les données d'utilisateur ;
la sélection d'une norme de communications qui doit être utilisée pour émettre les données d'utilisateur comportant les étapes consistant à :
sélectionner au moins deux normes de communications parmi d'autres normes de communications à l'exception de la norme de communications actuellement utilisée pour émettre simultanément les données d'utilisateur d'après une proportion prédéfinie ; ou
sélectionner la norme de communications actuellement utilisée et au moins une norme de communications parmi lesdites autres normes de communications pour émettre simultanément les données d'utilisateur d'après une proportion prédéfinie ;
effectuer (104, 205) une adaptation de paramètres sur les données d'utilisateur d'après un paramètre de système correspondant à la norme de communications sélectionnée ; et
émettre (105, 206) les données qui sont obtenues après le traitement d'adaptation de paramètres en utilisant la couche de liaison de données et une couche physique.

10. Procédé selon la revendication 9, la réalisation (104, 205) d'une adaptation de paramètres sur les données d'utilisateur d'après un paramètre de système correspondant à la norme de communications sélectionnée comportant l'étape consistant à :
effectuer une adaptation de débit, une adaptation de longueur de paquets, une adaptation de qualité de service ou une adaptation de sécurité sur les données d'utilisateur d'après le paramètre de système correspondant à la norme de communications sélectionnée.

11. Procédé selon la revendication 9 ou 10, la surveillance (101, 201) de paramètres de performances de liaison correspondant respectivement à des normes multiples de communications prises en charge par une couche de liaison de données comportant l'étape consistant à :
surveiller des quantités d'utilisateurs authentifiés qui accèdent à un réseau, des capacités ou des longueurs de file d'attente d'antémémoire correspondant respectivement aux normes multiples de communications prises en charge par la couche de liaison de données.

12. Procédé selon la revendication 11, l'action de déterminer (102, 202), d'après un paramètre de performances de liaison correspondant à une norme de communications actuellement utilisée, si une autre norme de communications doit être utilisée pour émettre des données d'utilisateur comportant les étapes consistant à :
comparer une quantité d'utilisateurs authentifiés qui accèdent à un réseau, une capacité ou une longueur de file d'attente d'antémémoire de la norme de communications actuellement utilisée avec un seuil prédéfini correspondant ; et
si la quantité d'utilisateurs authentifiés qui accèdent à un réseau, la capacité ou la longueur de file d'attente d'antémémoire est supérieure au seuil prédéfini correspondant, déterminer que ladite autre norme de communications doit être utilisée pour émettre les données d'utilisateur.

13. Procédé selon la revendication 9, la réalisation d'une adaptation de paramètres dans différentes normes de communications sur les données d'utilisateur d'après la norme de communications sélectionnée comportant les étapes consistant :
si une norme de communications qui appartient à une première norme de communications pour laquelle une politique de réservation de ressources de spectre est utilisée existe dans la norme de communications sélectionnée parmi les autres normes de communications, à solliciter (204) un gestionnaire de ressources de la norme de communications sélectionnée qui appartient à la première norme de communications pour obtenir une ressource d'émission, et à effectuer une adaptation de paramètres sur les données d'utilisateur après que la ressource d'émission a été obtenue par sollicitation, la première norme de communications comportant un réseau cellulaire sans fil et l'Interopérabilité mondiale des accès à hyperfréquence, WiMAX.

14. Procédé selon la revendication 9, le procédé comportant en outre l'étape consistant à : recevoir (207) un message de retour d'accusé de réception ACK ou un non- message de retour d'accusé de réception NACK, le message de retour d'accusé de réception étant un message émis après qu'une extrémité de réception de données confirme que les données ont été reçues correctement, et le message de retour de non-accusé de réception étant un message émis après que l'extrémité de réception de données confirme que les données n'ont pas été reçues correctement.
